Europäisches Patentamt

European Patent Office

Office européen des brevets

(19)

(11) Veröffentlichungsnummer : **0 070 379**
**B1**

(12) **EUROPÄISCHE PATENTSCHRIFT**

(45) Veröffentlichungstag der Patentschrift :
07.11.84

(21) Anmeldenummer : **82104811.3**

(22) Anmeldetag : **02.06.82**

(51) Int. Cl.³ : **B 60 J   3/02**

(54) Sonnenblende für Fahrzeuge.

(30) Priorität : **22.07.81 DE 3128853**

(43) Veröffentlichungstag der Anmeldung :
**26.01.83 Patentblatt 83/04**

(45) Bekanntmachung des Hinweises auf die Patenterteilung : **07.11.84 Patentblatt 84/45**

(84) Benannte Vertragsstaaten :
**DE FR GB IT SE**

(56) Entgegenhaltungen :
**DE-A- 2 913 933**
**DE-U- 1 797 014**

(73) Patentinhaber : **Gebr. Happich GmbH**
**Postfach 10 02 49 Clausenbrücke 1**
**D-5600 Wuppertal 1 (DE)**

(72) Erfinder : **Viertel, Lothar**
**V. Gartenreihe 48**
**D-6630 Saarlouis (DE)**
Erfinder : **Mahler, Gert**
**Kreuzstrasse 5**
**D-5608 Radevormwald (DE)**

## Beschreibung

Die Erfindung bezieht sich auf eine Sonnenblende für Fahrzeuge der im Oberbegriff des Anspruchs 1 angegebenen und aus der DE-A-2 913 933 bekannten Art.

Die Sonnenblendenkörper von Fahrzeugsonnenblenden sind im allgemeinen mit einem den Kern umgebenden Bezugsmaterial versehen, wobei der Bezug im wesentlichen dazu dient, das optische Erscheinungsbild der Sonnenblende zu verbessern. Die Anbringung des Bezuges is relativ schnell und einfach mittels einer Schweißelektrode durchzuführen, sofern das Bezugsmaterial schweißfähig ist, was insbesondere für Kunststofffolien zutrifft. Oftmals werden aber Sonnenblenden gewünscht, deren Bezug aus einem nichtschweißfähigen Material, wie textile Flächengebilde, Naturleder oder dgl. bestehen soll. Die Konfektionierung eines Sonnenblendenkörpers mit einem Bezug aus nichtschweißfähigem Material verlangt jedoch einen erheblichen Arbeitsaufwand, weil bisher die Bezugsmaterialzuschnitte längs der umlaufenden Randkante des Sonnenblendenkörpers aneinandergenäht und anschließend noch beschnitten werden.

Der Erfindung liegt nun die Aufgabe zugrunde, bei einer Sonnenblende der eingangs genannten Art den Aufbau des Sonnenblendenkörpers, insbesondere in bezug auf die Anordnung des Bezuges zu vereinfachen und die Herstellungskosten zu senken.

Zur Lösung dieser Aufgabe ist erfindungsgemäß vorgesehen, daß auf den von einander abgewandten Seitenflächen der Rahmenleiste das Bezugsmaterial mit einem umlaufenden Randkantenbereich fest angeordnet ist und daß die Rahmenleiste das Bezugsmaterial mit ihrem äußeren Randbereich umlaufend überragt. Vorzugsweise ist das Bezugsmaterial auf die Rahmenleiste geklebt oder geschweißt.

Die Erfindung bietet verschiedene wesentliche Vorteile. Zunächst ist es von Vorteil, daß die äußere umlaufende Randkante des Sonnenblendenkörpers nunmehr durch die peripherische Rahmenleiste gebildet ist. Der dadurch erzielte Randabschluß ist optisch einwandfrei und ästhetisch ansprechender gestaltbar als ein zusammengenähter Bezugsmaterialabschluß, und zwar auch dann, wenn der Bezugsmaterialabschluß nach dem Zusammennähen beschnitten worden ist. Weiterhin bietet die peripherische Rahmenleiste gute Auflageflächen für die Befestigung der Bezugsmaterialrandkantenbereiche. Das Bezugsmaterial kann unabhängig davon, ob es schweißfähig oder nicht schweißfähig ist, an der Rahmenleiste befestigt werden. Ist das Bezugsmaterial schweißfähig oder rückseitig mit einer fest haftenden, schweißfähigen Beschichtung versehen, so läßt sich eine Befestigung an der Rahmenleiste, die vorzugsweise aus Kunststoff besteht, schnell und einfach mittels einer Schweißelektrode durchführen, wobei durch eine entsprechende Ausbildung der Schweißelektrode auch gleichzeitig ein Beschnitt des Bezugsmaterials zwecks Erzielung eines sauberen Randabschlusses möglich ist. Besteht das Bezugsmaterial hingegen aus einem nicht schweißfähigen textilen Flächengebilde, aus Naturleder od. dgl., so ist eine Befestigung an der Rahmenleiste durch Kleben möglich. Hierfür wird vorzugsweise ein zwischen Bezugsmaterial und Rahmenleiste gefügter wärmeaktivierbarer Haftvermittler eingesetzt. Zweckmäßigerweise wird dabei zumindest der umlaufende Randkantenbereich des Bezugsmaterials und/oder die Rahmenleiste mit einem Haftvermittlerauftrag versehen. Hierdurch ist es dann möglich, das Bezugsmaterial und die Rahmenleiste mittels einer Wärmeelektrode, die auch hier eine Schneide zum Beschneiden des Bezugsmaterials aufweisen kann, fest miteinander zu verbinden. Die Erfindung bietet weiterhin die Möglichkeit, einen Sonnenblendenkörper einseitig z. B. mit einem Lederbezug und anderseitig z. B. mit einem textilen Stoffbezug auszurüsten. Ferner ist es möglich, die Rahmenleiste dem Bezugsmaterial farblich anzupassen. Schließlich können der Erfindung zufolge mit ein und derselben Herstellungsvorrichtung Sonnenblendenkörper maschinel mit Bezügen versehen werden, die entweder aus schweißfähigen oder nichtschweißfähigen oder auch aus der Kombination dieser Materialien bestehen, so daß auch das kostenintensive Anlernen von Arbeitskräften auf verschiedene Befestigungsarten entfällt.

Weitere vorteilhafte Ausgestaltungen und zweckmäßige Weiterbildungen der Erfindung sind in den abhängigen Ansprüchen gekennzeichnet.

Im folgenden wird die Erfindung anhand von in der Zeichnung dargestellten Ausführungsbeispielen näher erläutert.

Es zeigen

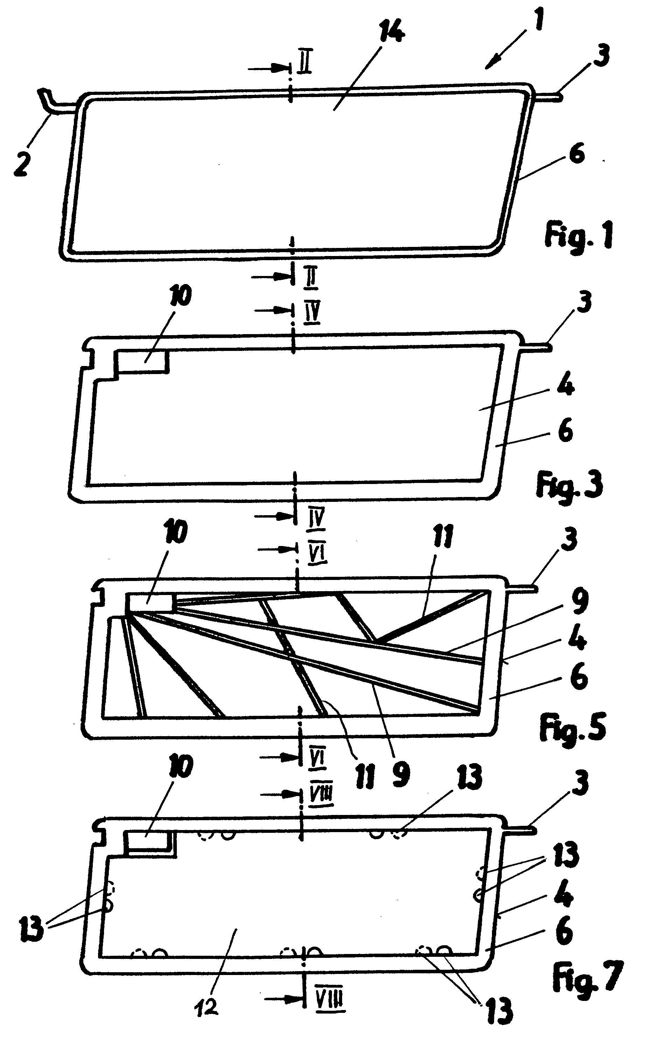

Figur 1    einen Sonnenblendenkörper in Ansicht,

Figur 2    einen Schnitt II-II nach Fig. 1,

Figur 3    ein erstes Ausführungsbeispiel einer Einlage für den Sonnenblendenkörper,

Figur 4    einen Schnitt IV-IV nach Fig. 3,

Figur 5    ein zweites Ausführungsbeispiel einer Einlage,

Figur 6    einen Schnitt VI-VI nach Fig. 5,

Figur 7    ein weiteres Ausführungsbeispiel einer Einlage,

Figur 8    einen Schnitt VIII-VIII nach Fig. 7 und

Figur 9    eine schaubildliche Ansicht eines Sonnenblendenkörpers, teilweise weggebrochen dargestellt.

Die Sonnenblende besteht aus einem Sonnenblendenkörper 1 mit einer an einem nicht gezeigten Drehlager anordbaren Lagerachse 2 und mit einem an einem nicht gezeigten Gegenlager anordbaren Lagerzapfen 3.

Der Sonnenblendenkörper 1 weist einen Kern auf, welcher aus einer ihn aussteifenden Einlage 4 mit beidflächig darauf angeordneten Posterkörper 5 besteht.

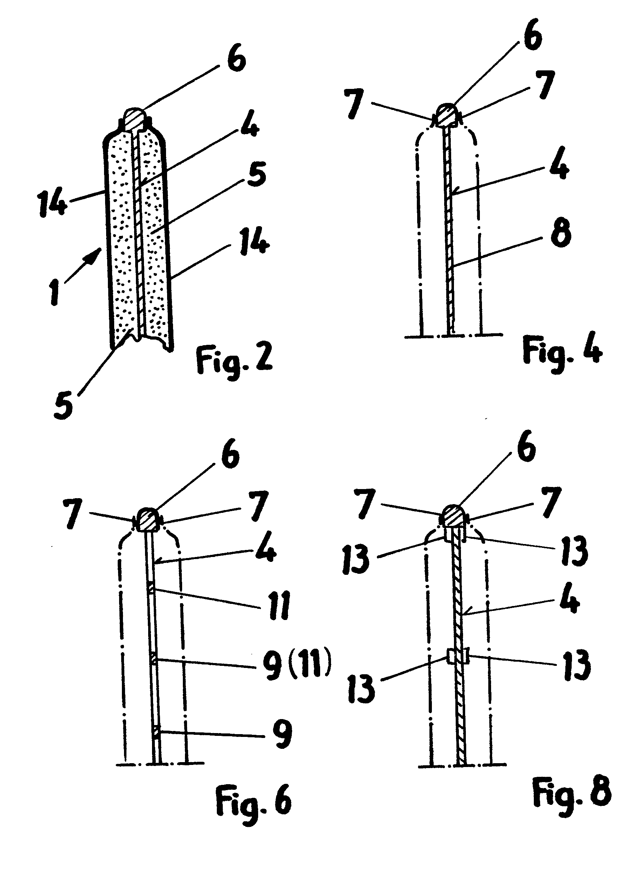

Bestandteil der Einlage 4, dist eine im wesentlichen rechteckige Ausbildung besitzt, ist eine äußere umlaufende Rahmenleiste 6 und ein in einem Eckbereich angeordnetes Lager 10. Die peripherische Rahmenleiste 6 weist glatte Seitenflächen 7 auf, die zweckmäßigerweise, aber nicht notwendigerweise parallel zueinander verlaufen. Bei den Ausführungsbeispielen der Fig. 3 bis 6 bildet die Einlage 4 und das Lager 10 mit der Rahmenleiste 6 jeweils eine einstückige, materialeinheitliche Einheit, welche zweckmäßigerweise aus einem Kunststoffspritzgußkörper besteht. Bei den Fig. 3 und 4 ist als Einlage 4 eine gegenüber der Rahmenleiste 6 dünnere Platte 8 vorgesehen, die aus Gründen der Material- und Gewichtseinsparung auch mit nicht dargestellten Öffnungen versehen sein kann.

Fig. 5 und 6 zeigen eine Einlage 4 mit zwischen der Rahmenleiste 6 angeordneten Streben 9 und diese teilweise miteinander verbindende Zwischenstreben 11. Die Streben 9 gehen vom Lager 10 aus und verlaufen in Zugbelastungsrichtung etwa in Richtung der dem Lager 10 diagonal gegenüberliegenden Ecke der Rahmenleiste 6. Die zugaufnehmenden Streben 9 nehmen, weil sie vom Festpunkt der Einlage 4, nämlich vom Lager 10 ausgehen und in Verformungsrichtung des Sonnenblendenkörpers 1 verlaufen, alle auftretenden Belastungen auf.

Beim Ausführungsbeispiel der Fig. 7 und 8 ist der von der Rahmenleiste 6 umbegene Raum durch eine Einsatzplatte 12, die aus Preßpappe od. dgl. bestehen kann, ausgefüllt. Die Einsatzplatte 12 wird etwa in der Medianebene des Sonnenblendenkörpers 1 durch an dem Innenrand der Rahmenleiste 6 angeformte Zungen 13 gehalten.

Alle Ausführungsbeispiele haben miteinander gemeinsam, daß die Rahmenleiste 6 mit relativ großflächigen Seitenflächen 7 ausgebildet ist, die eine satte Auflage der Randkantenbereiche des Bezugsmaterials 14 ermöglicht. Relativ großflächige Anlagebereiche zwischen den Seitenflächen 7 der Rahmenleiste 6 und den Randkantenbereichen des Bezugsmaterials 14 ermöglichen aber auch eine zuverlässig feste und dauerhafte Verbindung dieser Teile, wobei die Verbindung vorzugsweise, jedoch abhändig von der Materialbeschaffenheit oder Vorbehandlung des Bezugsmaterials 14, als Klebeoder Schweißverbindung ausgeführt wird. Besteht das Bezugsmaterial aus einer schweißfähigen oder entsprechend beschichteten Folie, so ist einer Schweißverbindung der Vorzug zu geben, weil hier ohne Zusatzmittel ein inniger Verbund zwischen Rahmenleiste 6 und Bezugsmaterial 14 mittels einer Schweißelektrode hergestellt werden kann. Für die Herstellung einer Klebeverbindung ist hingegen ein Haftvermittler zwischen Rahmenleiste 6 und Bezugsmaterial 14 erforderlich. Vorzugsweise ist für die Herstellung der Klebeverbindung die Rahmenleiste 6 und/ oder zumindest der Randkantenbereich des Bezugsmaterials 14 mit einem wärmeaktivierbaren Haftvermittler beschichtet. Durch Zuführung von Wärme mittels einer Wärmeelektrode od. dgl. wird der Haftvermittler aktiviert und dadurch werden dann Rahmenleiste 6 und Bezugsmaterial 14 fest miteinander verbunden.

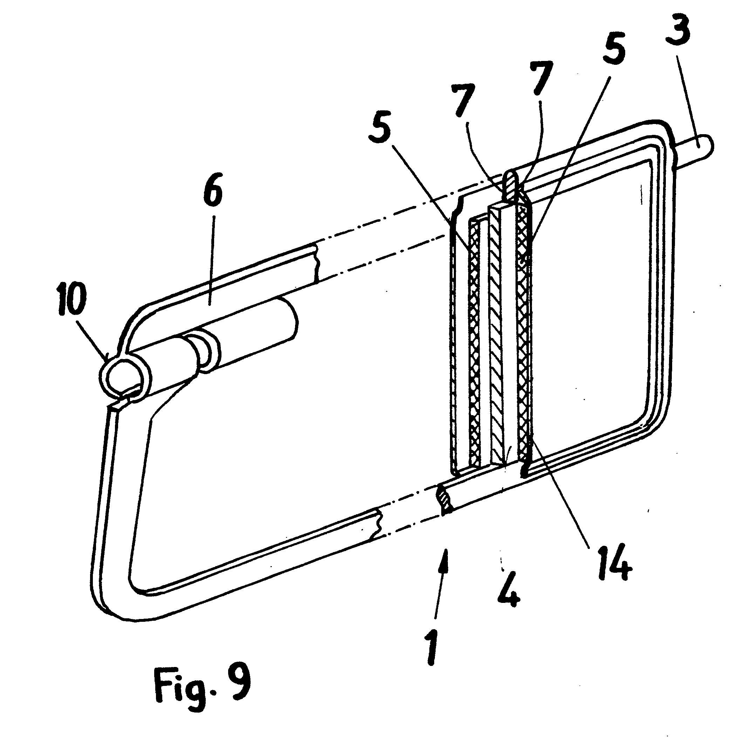

In Fig. 9 ist der Aufbau eines Sonnenblendenkörpers 1 verdeutlicht. Es ist zu erkennen, daß der Kern aus der Einlage 4 mit der peripherischen Rahmenleiste 6 und den aus Schaumkunststoff od. dgl. bestehenden Polsterkörpers 5 gebildet ist. Es ist weiterhin zu erkennen, daß die Polsterkörper 5 von dem Bezugsmaterial 14 bedeckt sind, dessen Randkantenbereiche, wie zuvor beschrieben, an der Rahmenleiste 6 festgelegt sind. Die Rahmenleiste 6 überragt die Randkanten des Bezugsmaterials umlaufend, wobei der überstehende Bereich, je nach stilistischer Anforderung, mehr oder weniger groß sein kann. Die äußere Kante der Rahmenleiste 6 ist abgerundet ausgebildet, so daß die Sonnenblende auch insoweit den Sicherheitsanforderungen gerecht wird.

## Ansprüche

1. Sonnenblende für Fahrzeuge, bestehend aus einem Sonnenblendenkörper (1) mit einem flachen Kern, dessen Breitseiten mit einem Bezugsmaterial (14) versehen sind, wobei der Kern eine peripherische Rahmenleiste (6) aufweist, dadurch gekennzeichnet, daß auf den von einander abgewandten Seitenflächen (7) der Rahmenleiste das Bezugsmaterial (14) mit einem umlaufenden Randkantenbereich fest angeordnet ist und daß die Rahmenleiste (6) das Bezugsmaterial (14) mit ihrem äußeren Randbereich umlaufend überragt.

2. Sonnenblende nach Anspruch 1, dadurch gekennzeichnet, daß das Bezugsmaterial (14) auf die Rahmenleiste (6) geklebt oder geschweißt ist.

3. Sonnenblende nach einem oder mehreren der Ansprüche 1 bis 2, dadurch gekennzeichnet, daß der äußere Randbereich der Rahmenleiste (6) abgerundet ausgebildet ist.

4. Sonnenblende nach einem oder mehreren der Ansprüche 1 bis 3, dadurch gekennzeichnet, daß die Rahmenleiste (6) Bestandteil einer den Sonnenblendenkörper (1) aussteifenden Einlage (4) ist.

5. Sonnenblende nach einem oder mehreren der Ansprüche 1 bis 4, dadurch gekennzeichnet, daß die Rahmenleiste (6) einstückiger Bestandteil der Einlage (4) ist.

6. Sonnenblende nach einem oder mehreren der vorangegangenen Ansprüche, dadurch gekennzeichnet, daß die mit der Rahmenleiste (6) ausgebildete Einlage (4) ein Kunststoffspritzgußteil ist.

7. Sonnenblende nach einem oder mehreren der vorangegangenen Ansprüche, dadurch gekennzeichnet, daß die Rahmenleiste (6) eine im wesentlichen rechteckige Umrißkontur und wenigstens ein in einem Eckbereich angeordnetes Lager (10) aufweist.

8. Sonnenblende nach einem oder mehreren der Ansprüche 1 bis 7, dadurch gekennzeichnet, daß der Kern aus einer Einlage (4) mit einer peripherischen Rahmenleiste (6) und aus beidseitig auf der Einlage (4) unter zumindest weitgehender Freilassung der Rahmenleiste (6) angeordneten Polsterkörpern (5) besteht.

9. Sonnenblende nach einem oder mehreren der Ansprüche 1 bis 8, dadurch gekennzeichnet, daß das Bezugsmaterial (14) und die Rahmenleiste (6) durch einen zwischengefügten wärmeaktivierbaren Haftvermittler miteinander verklebt sind.

## Claims

1. A sun visor for a vehicle, comprising a sunvisor body (1) with a flat core the wide sides of which are provided with a coating material (14), the core having a peripheral frame strip (6), characterized in that the coating material (14) is secured, by a peripheral edge zone, to the lateral faces (7) of the frame strip which face away from each other, and in that the frame strip (6) peripherally projects beyond the coating material (14) by means of its outer edge zone.

2. A sun visor according to claim 1, characterized in that the coating material (14) is adhesively attached to or welded on the frame strip (6).

3. A sun visor according to claim 1 or claim 2, characterized in that the outer edge zone of the frame strip (6) is rounded.

4. A sun visor according to claims 1 to 3, characterized in that the frame strip (6) is a constituent of an insert (4) which stiffens the body (1) of the sun visor.

5. A sun visor according to any one or more of claims 1 to 4, characterized in that the frame strip (6) is an integral component of the insert (4).

6. A sun visor according to any one or more of the preceding claims, characterized in that the insert (4), formed integrally with the frame strip (6), is an injection-moulded plastics part.

7. A sun visor according to any one or more of the preceding claims, characterized in that the frame strip (6) has a substantially rectangular contour and incorporates at least one mounting means (10) arranged in a corner zone.

8. A sun visor according to any one or more of claims 1 to 7, characterized in that the core comprises an insert (4) with a peripheral frame strip (6) and cushioning elements (5) which are arranged on both sides of the insert (4), at least a substantial part of the frame strip (6) remaining uncovered.

9. A sun visor according to any one or more of claims 1 to 8, characterized in that the coating material (14) and the frame strip (6) are bonded together by an interposed adhesive which can be activated by heat.

## Revendications

1. Pare-soleil pour véhicules, comprenant un corps (1) pourvu d'une partie intérieure plate dont les faces comportent une matière de revêtement (14), la partie intérieure comportant un encadrement périphérique (6), caractérisé en ce que la matière de revêtement (14) est disposée solidement par une zone marginale périphérique sur les surfaces latérales mutuellement opposées (7) de l'encadrement, et en ce que l'encadrement (6) dépasse périphériquement de la matière de revêtement (14) par sa zone marginale extérieure.

2. Pare-soleil selon la revendication 1, caractérisé en ce que la matière de revêtement (14) est collée ou soudée sur l'encadrement (6).

3. Pare-soleil selon une ou plusieurs des revendications 1 et 2, caractérisé en ce que la zone marginale extérieure de l'encadrement (6) a une conformation arrondie.

4. Pare-soleil selon une ou plusieurs des revendications 1 à 3, caractérisé en ce que l'encadrement (6) fait partie d'une garniture (4) renforçant le corps (1) du pare-soleil.

5. Pare-soleil selon une ou plusieurs des revendications 1 à 4, caractérisé en ce que l'encadrement (6) fait une seule pièce avec la garniture intérieure (4).

6. Pare-soleil selon une ou plusieurs des revendications précédentes, caractérisé en ce que la garniture (4) formée avec l'encadrement (6) est une pièce de matière plastique moulée par injection.

7. Pare-soleil selon une ou plusieurs des revendications précédentes, caractérisé en ce que l'encadrement (6) présente un contour sensiblement rectangulaire et au moins un palier (10) placé dans une zone d'angle.

8. Pare-soleil selon une ou plusieurs des revendications 1 à 7, caractérisé en ce que la partie intérieure comprend une garniture (4) comportant un encadrement périphérique (6) et des corps de rembourrage (5) disposés des deux côtés de la garniture (4) en laissant l'encadrement (6) dégagé au moins dans une large mesure.

9. Pare-soleil selon une ou plusieurs des revendications 1 à 8, caractérisé en ce que la matière de revêtement (14) et l'encadrement (6) sont collés ensemble par un adhésif activable par la chaleur, intercalé.

0 070 379

Fig. 1

Fig. 3

Fig. 5

Fig. 7

Fig. 2

Fig. 4

Fig. 6

Fig. 8

Fig. 9